# EUROPÄISCHE PATENTSCHRIFT

(11) **EP 1 202 871 B1**
(45) Veröffentlichungstag und Bekanntmachung des Hinweises auf die Patenterteilung: **12.11.2003**
(21) Anmeldenummer: 00958458.2
(22) Anmeldetag: 16.08.2000
(51) Int. Cl.: B60N 2/48, B60N 2/42

(54) **Rückenlehne für einen Fahrzeugsitz mit einer integrierten Schutzeinrichtung**
Seat back for a vehicle seat comprising an integrated protective device
Dossier de siège de véhicule à dispositif de protection intégré

(30) Priorität: 17.08.1999 DE 19938904; 08.02.2000 DE 20002171 U
(43) Veröffentlichungstag der Anmeldung: 08.05.2002
(73) Patentinhaber: Johnson Controls GmbH, 51399 Burscheid (DE)
(72) Erfinder: HAKE, Ernst-Jürgen, D-42477 Radevormwald (DE); MÜLLER, Hans-Joachim, D-51429 Bergisch Gladbach (DE); SCHMALE, Gerhard, D-42499 Hückeswagen (DE); STRIEDER, Lutz, D-42855 Remscheid (DE)
(74) Vertreter: Kutzenberger, Helga, Dr.
(86) Internationale Anmeldenummer: EP0007995
(87) Internationale Veröffentlichungsnummer: WO01012465

(56) Entgegenhaltungen:
- DE-A- 19 938 940
- DE-A- 19 945 411
- US-A- 5 795 019
- US-A- 5 833 312

## Beschreibung

Die vorliegende Erfindung betrifft eine Rückenlehne für einen Fahrzeugsitz mit einer integrierten Schutzeinrichtung gegen unfallbedingte Verletzungen eines Sitzbenutzers im Falle eines Heckaufpralls, insbesondere gegen Halswirbelsyndrom bzw. Schleudertrauma, mit einem unteren, mit einem Sitzteil verbundenen Lehnenteil und mit einem oberen Lehnenteil, das um eine in der Rückenlehne quer zur Fahrzeuglängsachse verlaufende Achse relativ zum unteren Lehnenteil aus einer Normal-Gebrauchsstellung heraus in einer in Fahrtrichtung weisenden Schwenkrichtung durch ein Drehmoment um einen Winkelbereich in eine Sicherheitsstellung verschwenkbar ist, wobei die Schutzeinrichtung eine Einrichtung zur Erzeugung des Drehmomentes Mittel zur Detektierung eines Heckaufpralls und Arretiermittel zur Fixierung des oberen Lehnenteils in der Normal-Gebrauchsstellung aufweist (s. zum Beispiel DE 19 743 339 A1).

Die heutige Entwicklung in der Fahrzeugtechnik geht vielfach dahin, daß mit den zur Verfügung stehenden Materialien und Konstruktionsmethoden die Rückenlehnen der Fahrzeugsitze leicht, aber mit hoher Steifigkeit ausgeführt werden, um bei geringem Gewicht dennoch den auftretenden hohen Belastungen bei einem Unfallgeschehen standzuhalten und den Körper des Fahrzeug-Insassen ausreichend abzustützen. Dies führt aber dazu, daß beispielsweise bereits bei einem sogenannten Stoßstangen-Unfall bei niedriger Geschwindigkeit im Bereich von 10 bis 30 km/h (low speed crash), bei dem eine Beschleunigung (ca. 8 - 20 g) des Körpers auftritt, eine Schädigung von dessen Halsmuskulatur und Halswirbelsäule entstehen kann, weil die Stoßkraft nahezu ungedämpft auf die Person einwirkt. Es tritt ein unerwünschter Effekt, der sogenannte Peitscheneffekt auf Kopf und Hals auf, der zu einem Schleudertrauma - einer Überdehnung und Überbelastung der Halswirbelsäule und der Haltemuskulatur des Kopfes - führt. Dieser Effekt und die dabei insbesondere im Halsbereich möglichen Wirbelsäulenverletzungen sind auch unter dem englischen Begriff "whiplash" bekannt.

Zum Schutz gegen diese Verletzungen sind passive und aktive Vorrichtungen bekannt, wobei letztere bei einem Unfall aktiv den Abstand zwischen dem Kopf der Person und der Kopfstütze der Rückenlehne verkürzen sollen. Eine solche bekannte (aktive) Vorrichtung der eingangs genannten Art ist in der o.g. DE 197 43 339 A1 beschrieben. Dabei trifft der durch sein Beharrungsvermögen bei einem Aufprall relativ zur Fahrtrichtung in die Rückenlehne des Fahrzeugsitzes beschleunigte bzw. nach rückwärts gebogenen Körper des Fahrzeuginsassen (Sitzbenutzers) auf ein unterhalb der Schwenkachse des oberen Lehnenteils angebrachtes Prallblech auf, das schwenkbar mit dem oberen Lehnenteil, insbesondere mit einer Kopfstütze am Lehnenteil, verbunden ist. Durch die Relativbewegung des Prallblechs nach hinten schwenkt die Kopfstütze nach vom. Mit der Kopfstützenbewegung soll die Wirkung des Peitscheneffektes vermindert werden.

Nachteilig ist hierbei, daß die Relativbewegung der Kopfstütze erst durch den in die Rückenlehne hineingeschleuderten Insassen erfolgt. Das obere Lehnenteil kann dadurch in Schwenkrichtung nur um einen Wert beschleunigt werden, der maximal gleich dem Beschleunigungswert ist, den der Fahrzeugsitz durch den Aufprall erfährt. Da sich aber das Bewegungsverhalten des Sitzbenutzers nicht in jedem Fall genau vorhersehen läßt, können deshalb unter Umständen durch die aktive Gegenbewegung der Rückenlehne bzw. Kopfstütze sogar falsche, nicht gewollte, womöglich gefährliche, Effekte auftreten. So kann der Aufprall des Kopfes des Insassen sogar noch verstärkt und auch ein Aufsteigen des Insassen (Vertikalbewegung im Sitz nach oben) nicht vermieden werden. Bei einem Heckaufprall wird nämlich der Insasse derart in die meist aus der Senkrechten nach rückwärts geneigte Rückenlehne geschleudert, daß er das Bestreben hat, an der Rückenlehne, ähnlich einer Rampe, nach oben aufzusteigen. Dies führt in der Regel zum Versagen der Rückenlehne, die durch Überbelastung abknickt und nicht mehr in der Lage ist, den Insassen abzustützen. Insbesondere kann der Kopf des Sitzbenutzers so in eine Höhenposition gelangen, die sich oberhalb der Kopfstütze befindet, wo er nicht mehr abgestützt werden kann. Somit besteht bei der bekannten Rückenlehne ein erhebliches Unfallrestrisiko.

Mechanismen, die durch das Verlagern des Körpers des Fahrzeuginsassen entgegen der Fahrtrichtung in die Rückenlehne hinein ausgelöst werden, zeigen nicht die gewünschte Schutzwirkung. Als besonderer Nachteil erweisen sich die unterschiedlichen Größenabmessungen und die damit einhergehenden Gewichte der Fahrzeugbenutzer. Basierend hierauf ist nicht sicher gewährleistet, daß die Auslöseeinrichtung einer Schutzeinrichtung getroffen und wirksam wird. Ein weiterer Unsicherheitsfaktor ist die träge Reaktion der bisher bekannt gewordenen derartigen Mechanismen. Eine wesentliche Rolle spielt auch die Ausführung der Polsterung der Rückenlehne; diese sollte möglichst dünn im Bereich der Auslöseeinrichtung sein. Dies würde aber wiederum zu einer unerwünschten Verschlechterung des Polsterkomforts führen.

In der nicht vorveröffentlichten deutschen Patentanmeldung 199 38 904.7 ist daher vorgeschlagen worden, daß eine sichere Auslösung der Schutzeinrichtung unabhängig von der Konstitution des Fahrzeuginsassen bei einer Mindestbeschleunigung, welche z.B. am Fahrzeugsitz gemessen werden kann, erfolgt. Der gemessene Beschleunigungswert wird bei einem Kleinwagen bei einer wesentlich geringeren Auffahrgeschwindigkeit erreicht, als dies der Fall bei einer Limousine mit großer dämpfender Knautschzone oder bei einem Lastkraftwagen ist. Die vorgeschlagene Schutzeinrichtung weist einerseits eine Einrichtung auf, die unabhängig von einer Belegung des Fahrzeugsitzes das in Schwenkrichtung auf das obere Lehnenteil wirkende Drehmoment erzeugt, andererseits umfaßt sie Mittel zur Detektierung eines Heckaufpralls, die derart in Wirkverbindung mit der drehmomentenerzeugenden Einrichtung stehen, daß die Einrichtung im Falle des Heckaufpralls aktiviert und die Schwenkbewegung eingeleitet wird. Des weiteren sind dabei auch Arretiermittel zur Fixierung des oberen Lehnenteils in der Normal-Gebrauchsstellung und Arretiermittel zur Fixierung des oberen Lehnenteils gegen eine Rückbewegung aus der Sicherheitsstellung in die Normal-Gebrauchsstellung vorgesehen.

Der vorliegenden Erfindung liegt die Aufgabe zugrunde, mit konstruktiv wenig aufwendigen Mitteln eine Rückenlehne der genannten Art zu schaffen, deren Schutzeinrichtung einen verbesserten Verletzungsschutz des jeweiligen Sitzbenutzers gewährleistet, insbesondere durch eine verbesserte Abfangmöglichkeit und Dämpfung beim Auftreffen des Kopfes sowie des Oberkörpers der auf dem Sitz befindlichen Person auf die Kopfstütze bzw. die Rückenlehne. Dabei soll insbesondere in der Normal-Gebrauchsstellung und zusätzlich in der Sicherheitsstellung eine wirksame, aber den Auslösevorgang nicht behindernde Arretierung realisiert werden.

Die der Erfindung zugrundeliegende Aufgabe wird durch eine Rückenlehne der eingangs genannten Art gelöst, die dadurch gekennzeichnet ist, daß die Einrichtung zur Erzeugung des Drehmomentes aus einem unabhängig von einer Belegung des Fahrzeugsitzes wirkenden Kraftoder Energiespeicher, die Mittel zur Detektierung eines Heckaufpralls durch einen Fahrzeug-Crash-Sensor, wie einen Beschleunigungssensor, und die Arretiermittel aus einem Hebelsystem gebildet sind, wobei der Fahrzeug-Crash-Sensor derart in Wirkverbindung mit dem Kraft- oder Energiespeicher und mit dem die Arretiermittel zur Fixierung des oberen Lehnenteils bildenden Hebelsystem steht, daß im Falle des Heckaufpralls die Fixierung des oberen Lehnenteils in der Normal-Gebrauchsstellung aufgehoben, der Kraft- und Energiespeicher aktiviert und dadurch die Schwenkbewegung eingeleitet wird.

Erfindungsgemäß kann dabei insbesondere durch die Entarretierung des Hebelsystems das Verschwenken des oberen Lehnenteils vorzugsweise derart schnell verlaufen, daß das obere Lehnenteil sich in der Sicherheitsstellung befindet, ehe eine durch den Heckaufprall bedingte Kopfbewegung des Sitzbenutzers einsetzt. In der Sicherheitsstellung liegt das obere Lehnenteil unmittelbar am Körper des Sitzbenutzers an, so daß dieser sich vorteilhafterweise trotz der durch den Aufprall auf ihn wirkenden Beschleunigung nicht mehr nach hinten, entgegen der Fahrtrichtung des Fahrzeugs, frei bewegen und sich Unfallschäden zuziehen kann.

Bei der erfindungsgemäßen Rückenlehne ist es hinsichtlich der Effizienz der Schutzeinrichtung besonders vorteilhaft, wenn in oder an dem oberen Lehnenteil eine Kopfstütze befestigt ist. Dabei ist es günstig, die Kopfstütze, die in der Regel zum Einstellen der Höhenposition an Haltestangen geführt wird, in der Rückenlehne in Höhe des Schulterbereiches um eine zur Fahrzeugachse quer verlaufenden Achse kippbar zu lagern. Zu diesem Zweck kann z.B. ein oberer Querholm der Rückenlehne in oberen Abschnitten der Seitenholme der Rückenlehne mittels einer Schwenklagerung befestigt sein. Allerdings kann das obere Lehnenteil auch derartig ausgebildet sein, daß es die Funktion einer Kopfstütze übernimmt. In jedem Fall kann sich dadurch die jeweilige, den Fahrzeugsitz benutzende Person - vornehmlich bei besonderem Schutz des Hals- und Kopfbereiches - gleichmäßig unter abbremsender Energieabsorption durch den Fahrzeugsitz in die Lehne - hineinbewegen. Für die Kopfstütze wird somit erreicht, daß diese sich bei Vorliegen der Normal-Gebrauchsstellung der Rückenlehne in einer sogenannten Komfortstellung befindet, in der ihr Abstand zum Kopf eines Sitzbenutzers etwa 40 bis 110 mm betragen kann. Durch die Schwenkbewegung des oberen Lehnenteils wird die Kopfstütze dann in eine sogenannte Abfangstellung überführt, in der ihr Abstand zum Kopf eines Sitzbenutzers Null oder nahezu Null ist. Der Normal-Gebrauchsstellung und der Sicherheitsstellung des oberen Lehnenteils entsprechen bei Vorhandensein einer Kopfstütze somit deren Komfort- und die Abfangstellung.

Als drehmomenterzeugende Einrichtung für die Schwenkbewegung des die Kopfstütze tragenden Querholmes ist dabei ein Kraft- oder Energiespeicher vorgesehen. Hierbei hat sich insbesondere eine vorgespannte Drehfeder als vorteilhaft erwiesen, weil diese eine sehr geringe Eigenbeschleunigung aufweist und daher im Vergleich zu Zug- oder Druckfedern weniger Bauraum bei gleicher Wirkung erfordert.

Das Hebelsystem der Arretiermittel zur Fixierung des oberen Lehnenteils in der Normal-Gebrauchsstellung kann dabei in bevorzugter Weise aus mindestens zwei zusammenwirkenden Hebeln besteht. Ein erster Hebel - im weiteren Klinke genannt - kann den durch die Drehfeder vorgespannten schwenkbaren Querholm gegenüber einem feststehenden Gegenlager abstützen, während ein zweiter Hebel, der im weiteren Arretierhebel genannt wird, als Arretierung der Klinke wirkt. Bei einem Heckaufprall wird der Arretierhebel derart verschwenkt, daß er die Arretierung der Klinke freigibt. Das Auslösen des Arretierhebels kann mit einer nur sehr geringen Betätigungskraft realisiert werden, wodurch eine sehr schnelle Hebelbewegung und damit eine rasche Entriegelung der Klinke möglich ist.

Die Betätigung des Arretierhebels kann in bevorzugter Weise durch einen Elektromagneten erfolgen, der seinen Impuls von dem Fahrzeug-Crash-Sensor, wie einem Beschleunigungssensor, erhält welcher als ein Mittel zur Detektierung des Heckaufpralls eingesetzt wird.

Nach Freigabe der Klinke schwenkt diese aus ihrer Abstützstellung heraus, wobei sich der Querholm der Rückenlehne mit der Kopfstütze in Richtung auf den Hinterkopf des Fahrzeuginsassen bewegen kann.

Nach einem Auslösen der Schutzeinrichtung kann diese durch erneute Aktivierung der Einrichtung, die das in Schwenkrichtung auf das obere Lehnenteil wirkende Drehmoment erzeugt (z.B. durch Spannen der Drehfeder), wieder in ihre Ausgangsposition gebracht werden, wobei dieser Vorgang aus Sicherheitsgründen nur in einer Werkstatt, in der nach einem Crash gleichzeitiq auch die Sitzfunktion überprüfbar ist, auszuführen ist.

Von besonderem Vorteil für eine sichere Verhinderung eines Feder- bzw. Rückpralleffektes beim Wirksamwerden der Schutzeinrichtung ist es, wenn die Arretiermittel zur Fixierung des oberen Lehnenteils gegen eine Rückbewegung aus der Sicherheitsstellung in die Normal-Gebrauchsstellung, die im weiteren auch als Rücklaufsperre bezeichnet werden, derart ausgeführt sind, daß sie nicht nur in der Normal-Gebrauchsstellung und in der Sicherheitsstellung selbst, sondern auch in mehreren dazwischenliegenden Positionen eine Arretierung ermöglichen. Dies kann beispielsweise mittels selbsthemmender, form- und oder kraftschlüssig - vorzugsweise klemmend - wirkender Wälzkörper- oder Keilsperren oder mittels einer Rasteinrichtung realisiert werden. Dabei ist es durch eine geeignete Auslegung der Rücklaufsperre vorteilhafterweise möglich, ein Rücklaufspiel des oberen Lehnenteils (Bewegung in Richtung der Sicherheitsstellung) auf einen maximalen Winkelbetrag von 1° zu begrenzen.

Weitere vorteilhafte Ausgestaltungsmerkmale der Erfindung sind in den Unteransprüchen sowie der folgenden Beschreibung enthalten.

Anhand der Zeichnung soll die Erfindung beispielhaft genauer erläutert werden. Dabei zeigen:
- Fig. 1: eine perspektivische, teilweise schematisierte Seitenansicht einer erfindungsgemäßen Rückenlehne,
- Fig. 2: eine Seitenansicht einer bevorzugten Ausführungsform einer erfindungsgemäßen Rückenlehne mit Darstellung eines Sitzbenutzers,
- Fig.3: eine perspektivische Darstellung des oberen Teils der in Fig. 2 dargestellten erfindungsgemäßen Rückenlehne,
- Fig. 4: eine seitliche Schnittansicht durch den in Fig. 3 dargestellten oberen Teil der erfindungsgemäßen Rückenlehne in einem mittleren Bereich (Ebene IV-IV-IV-IV),
- Fig. 5: eine weitere Ausführung einer erfindungsgemäßen Rückenlehne in einer Fig. 4 entsprechenden seitlichen Schnittansicht,
- Fig. 6 bis 8: drei weitere Ausführungen der Arretiermittel zur Fixierung des oberen Lehnenteils gegen eine Rückbewegung aus der Sicherheitsstellung in die Normal-Gebrauchsstellung einer erfindungsgemäßen Rückenlehne in einer Fig. 4 und 5 entsprechenden seitlichen Schnittansicht.
- Fig. 9: eine perspektivische Ansicht eines oberen Teils einer weiteren bevorzugten Ausführungsform einer erfindungsgemäßen Rückenlehne,
- Fig. 10: eine Seitenansicht der in Fig. 9 dargestellten Ausführungsform einer erfindungsgemäßen Rückenlehne.

In den verschiedenen Figuren der Zeichnung sind gleiche Teile stets mit denselben Bezugszeichen versehen, so daß sie in der Regel auch jeweils nur einmal beschrieben werden.

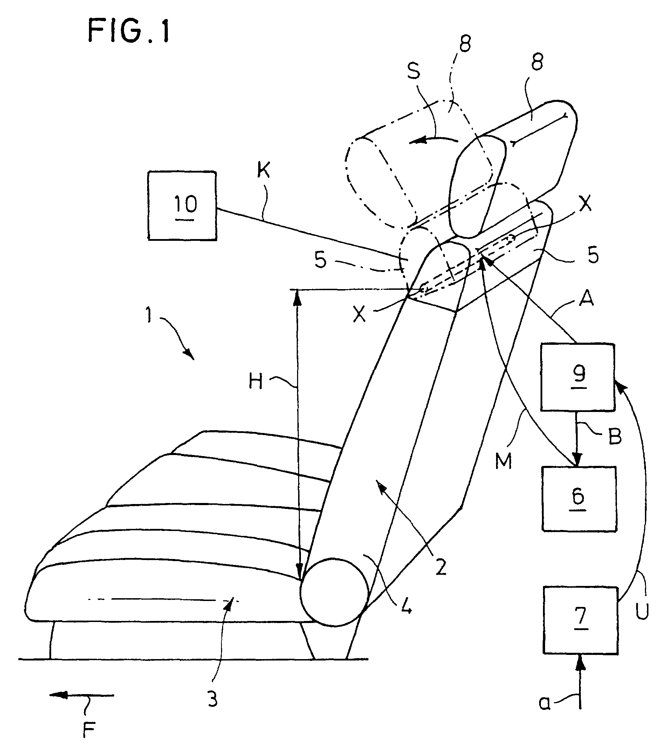

Wie sich zunächst aus Fig. 1 ergibt, besteht ein Fahrzeugsitz 1 aus einer erfindungsgemäßen Rückenlehne 2 und einem Sitzteil 3. In die Rückenlehne 2 ist eine Schutzeinrichtung integriert, die zum Schutz der jeweiligen Person gegen unfallbedingte Verletzungen, insbesondere gegen Halswirbelsyndrom bzw. Schleudertrauma im Falle eines Heckaufpralls, dient. Die Rückenlehne 2 weist ein unteres, mit dem Sitzteil 3 verbundenes Lehnenteil 4 und ein oberes Lehnenteil 5 auf, das um eine in der Rückenlehne 2 quer zur Fahrzeuglängsachse verlaufende Achse X-X relativ zum unteren Lehnenteil 4 aus einer Normal-Gebrauchsstellung (in Fig. 1 mit Vollinie gezeichnet) heraus in einer in Fahrtrichtung F weisenden Schwenkrichtung S durch ein in Schwenkrichtung S wirkendes Drehmoment um einen Winkelbereich in eine Sicherheitsstellung (in Fig. 1 mit strichpunktierter Linie gezeichnet) verschwenkbar ist.

Erfindungsgemäß weist die Schutzeinrichtung einerseits eine Einrichtung 6 auf, die unabhängig von einer Belegung des Fahrzeugsitzes 2 das in Schwenkrichtung S auf das obere Lehnenteil 5 wirkende Drehmoment (Pfeil M in Fig. 1) erzeugt, andererseits weist sie Mittel 7 zur Detektierung eines Heckaufpralls auf. Sowohl die drehmomenterzeugende Einrichtung 6 als auch die Detektierungsmittel 7 können unterschiedlich ausgebildet sein. Daher sind diese Teile der erfindungsgemäßen Rückenlehne 2 in Fig. 1 nur schematisiert (als Kästchen) gezeichnet.

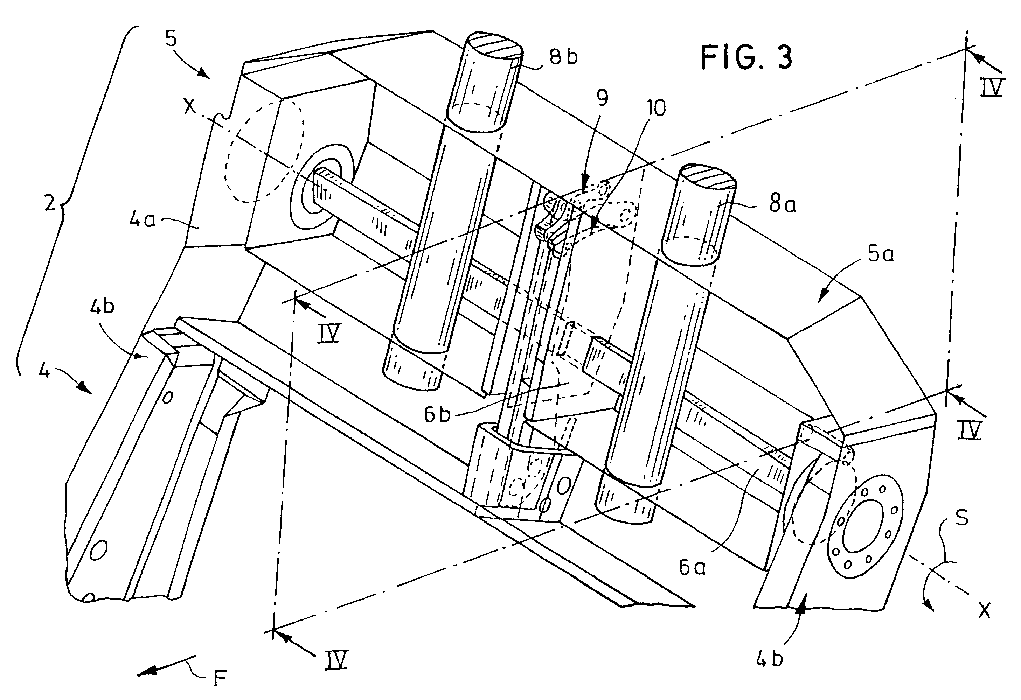

Die drehmomenterzeugende Einrichtung 6 kann beispielsweise mit Vorteil durch einen Kraft- oder Energiespeicher, insbesondere durch ein vorgespanntes Federelement oder mehrere vorgespannte Federelemente, gebildet sein. In den verschiedenen Ausführungen der Erfindung, die in den weiteren Figuren dargestellt sind, ist die drehmomenterzeugende Einrichtung als in der quer zur Fahrzeuglängsachse verlaufenden Schwenkachse X-X des oberen Lehnenteils 5 liegende, blattförmige Drehfeder (Torsionsfeder 6a) ausgebildet, die vorteilhafterweise eine sehr geringe Eigenbeschleunigung aufweist und bei gleicher Wirkung im Vergleich zu Zug- oder Druckfedem nur wenig Bauraum erfordert (vgl. insbesondere Fig. 3).

Die Mittel 7 zur Detektierung des Heckaufpralls können mit Vorteil durch einen Fahrzeug-Crash-Sensor, wie einen Beschleunigungssensor, gebildet sein. Zur Detektierung eines sogenannten Low Speed Crash kann der Fahrzeug-Crash-Sensor dabei derart eingestellt sein, daß er bei einer Beschleunigung a von etwa 40 bis 80 m/s² anspricht. Wie bereits erwähnt, richtet sich der Wert der Beschleunigung, bei dem der Sensor anspricht, nach der Art und Ausführung eines jeweiligen Kraftfahrzeugs (Kleinwagen / Limousine mit dämpfender Knautschzone / Lkw).

Die Detektierungsmittel 7 können derart in Wirkverbindung mit der drehmomenterzeugenden Einrichtung 6 stehen, daß die Einrichtung 6 im Falle des Heckaufpralls aktiviert und die Schwenkbewegung des oberen Lehnenteils 5 eingeleitet wird. Das untere Lehnenteil 4 verbleibt dabei in seiner ursprünglichen (Normal-Gebrauchs-) Stellung.

Das untere Lehnenteil 4 und das obere Lehnenteil 5 können bevorzugt zur Gewährleistung eines optimalen Schutzes des Sitzbenutzers in ihrer jeweiligen, nicht näher bezeichneten Länge definiert aufeinander abgestimmt sein bzw. die quer zur Fahrzeuglängsachse verlaufende Achse X-X, um die das obere Lehnenteil 5 verschwenkbar ist, kann in einer definierten Höhe H im Schulterbereich eines Sitzbenutzers, vorzugsweise etwa 400 bis 580 mm über dem Sitzteil 3, angeordnet sein.

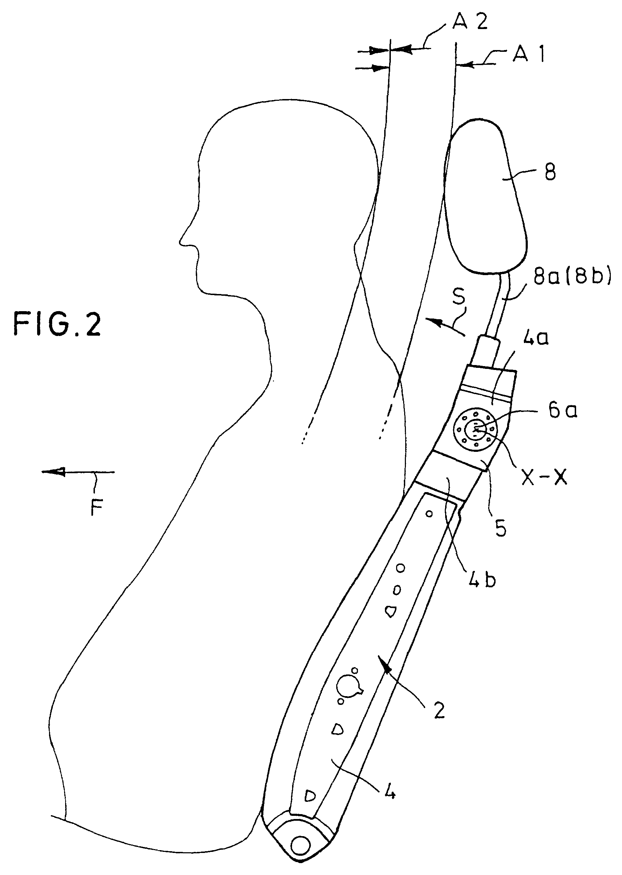

In oder an dem oberen Lehnenteil 5 ist eine Kopfstütze 8 befestigt, die bei einem Heckaufprall aus einer Komfortstellung (in Fig. 1 mit Vollinie gezeichnet), in der ihr Abstand (A1 in Fig. 2) zum Kopf eines Sitzbenutzers etwa 80 bis 120 mm beträgt, in eine Abfangstellung (in Fig. 1 mit strichpunktierter Linie gezeichnet) bewegt wird, in der ihr Abstand (A2 in Fig. 2) zum Kopf eines Sitzbenutzers Null oder nahezu Null ist.

Des weiteren sind Arretiermittel 9 zur Fixierung des oberen Lehnenteils 5 in der Normal-Gebrauchsstellung vorgesehen. Die Fixierung wird durch den Pfeil A in Fig. 1 veranschaulicht. Diese Arretiermittel 9 sind, wie nachfolgend anhand der Fig. 3 bis 5 im weiteren beschrieben wird, durch ein Hebelsystem gebildet. Durch den Pfeil B in Fig. 1 ist dabei angedeutet, daß die Arretiermittel 9 die Wirkung der drehmomenterzeugenden Einrichtung 6 blockieren können.

Die Mittel 7 zur Detektierung eines Heckaufpralls stehen derart in Wirkverbindung (Pfeil U in Fig. 1) mit den Arretiermitteln 9 zur Fixierung des oberen Lehnenteils 5 in der Normal-Gebrauchsstellung, daß im Falle des Aufpralls die Fixierung A des oberen Lehnenteils 5 in der Normal-Gebrauchsstellung und die Blockierung B der drehmomenterzeugenden Einrichtung 6 aufgehoben wird.

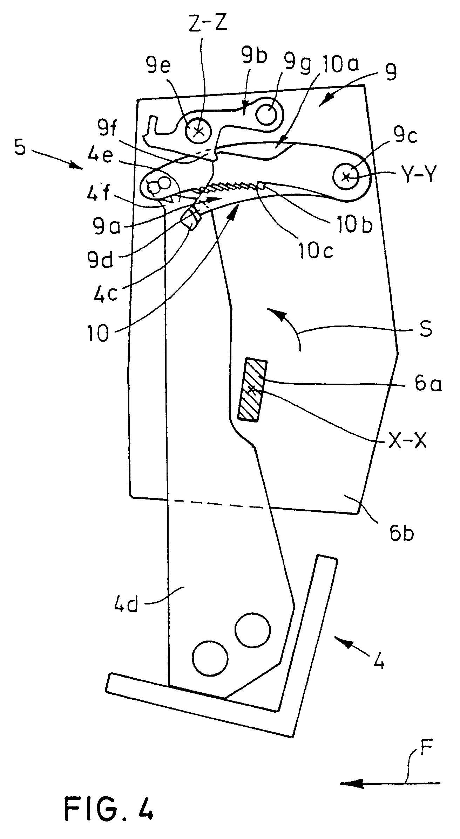

Weitere Arretiermittel 10, deren Wirkung durch den Pfeil K in Fig. 1 veranschaulicht wird und die nachstehend unter Bezugnahme auf Fig. 4 bis 8 genauer erläutert werden, können mit Vorteil zur Fixierung des oberen Lehnenteils 5 gegen eine Rückbewegung aus der Sicherheitsstellung in die Normal-Gebrauchsstellung vorgesehen sein.

Die als Ganzes nicht näher bezeichnete, in die erfindungsgemäße Rückenlehne 2 integrierte Schutzeinrichtung gegen unfallbedingte Verletzungen wird somit in der beschriebenen Ausführung der Erfindung durch das untere Lehnenteil 4, das um die Achse X-X schwenkbare obere Lehnenteil 5 mit der Kopfstütze 8, die drehmomenterzeugende Einrichtung 6, die Mittel 7 zur Detektierung eines Heckaufpralls, die als Hebelsystem ausgebildeten Arretiermittel 9 zur Fixierung des oberen Lehnenteils 5 in der Normal-Gebrauchsstellung und die Arretiermittel 10 zur Fixierung des oberen Lehnenteils 5 gegen eine Rückbewegung aus der Sicherheitsstellung in die Normal-Gebrauchsstellung gebildet.

Fig. 3, die ein vergrößertes Detail der in Fig. 2 dargestellten erfindungsgemäßen Rückenlehne 2 im Bereich des Übergangs vom unteren Lehnenteil 4 zum oberen Lehnenteil 5 zeigt, veranschaulicht eine bevorzugte konkrete Ausführungsform für die Einrichtung 6, die unabhängig von einer Belegung des Fahrzeugsitzes 2 das in Schwenkrichtung S auf das obere Lehnenteil 5 wirkende Drehmoment M erzeugt, für die als Hebelsystem ausgebildeten Arretiermittel 9 zur Fixierung des oberen Lehnenteils 5 in der Normal-Gebrauchsstellung und für die Arretiermittel 10 (Rücklaufsperre) zur Fixierung des oberen Lehnenteils 5 gegen eine Rückbewegung aus der Sicherheitsstellung in die Normal-Gebrauchsstellung.

Die drehmomenterzeugende Einrichtung 6 in Fig. 3 ist, wie bereits erwähnt wurde, als ein vorgespanntes Federelement - und zwar als eine im oberen Lehnenteil 5 gelagerte blattförmige Drehfeder 6a ausgebildet. Durch eine solche Drehfeder 6a können vorteilhafterweise sehr hohe Steltkräfte bzw. ein sehr hohes Drehmoment M erzeugt werden, die ein Verschwenken des oberen Lehnenteils 5 im Millisekundenbereich ermöglichen. Für das Federelement hat es sich als vorteilhaft erwiesen, wenn dieses eine fallende Kennlinie aufweist, die zur Erzeugung einer starken Beschleunigung eine hohe Anfangskraft, aber nur eine sehr geringe Endkraft aufweist. Dies trägt insbesondere der Tatsache Rechnung, daß aufgrund seiner Anordnung im Fahrzeug das obere Lehnenteil 5 durch den Crash eine Beschleunigung erfährt, die entgegen der Wirkung des Federelementes steht. Es ist insbesondere äußerst vorteilhaft, wenn die drehmomenterzeugende Einrichtung 6 derart ausgelegt ist, daß sie im Falle ihrer Aktivierung das obere Lehnenteil 5 in Schwenkrichtung S um einen größeren Betrag beschleunigt als es ein gemessener oder vorzugsweise ein empirisch bestimmter mittlerer Betrag der Beschleunigung a ist, den der Fahrzeugsitz 2 durch den Heckaufprall erfährt, was durch die Federkennlinie (Dicke und Material der Drehfeder 6a) eingestellt werden kann.

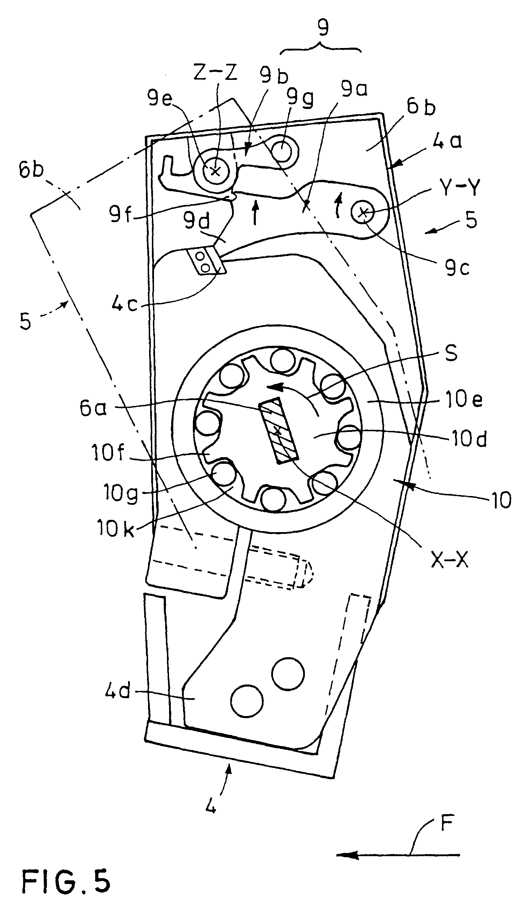

In Fig. 3 sind - wie an sich bekannt - zum Einstellen der Höhenposition vorgesehene Haltestangen 8a, 8b der Kopfstütze 8 erkennbar, mittels derer die Kopfstütze 8 in der Rückenlehne 2 in Höhe des Schulterbereiches eines Sitzbenutzers um eine zur Fahrzeugachse quer verlaufenden Achse X-X kippbar gelagert ist (zur Höhenlage der Achse X-X siehe H in Fig. 1). Zu diesem Zweck ist ein oberer, die Haltestangen 8a, 8b tragender Querholm 5a der Rückenlehne 2 in oberen, das untere Lehnenteil 4 überragenden jeweiligen Befestigungsabschnitten 4a an zwei mit dem unteren Lehnenteil 4 fest verbundenen Seitenholmen 4b um die Achse X-X, in der die Drehfeder 6a liegt, schwenkbar gelagert (Schwenkrichtung S). Die Drehfeder 6a selbst ist an ihren Enden seitlich in den Befestigungsabschnitten 4a eingespannt und etwa mittig über ein Halteteil 6b fest mit dem Querholm 5a verbunden. So kann sie in der - in Fig. 4 ausschließlich und in Fig. 5 als eine Position dargestellten - Normal-Gebrauchsstellung durch eine Verdrehung entgegen der bezeichneten Schwenkrichtung S vorgespannt werden.

Als Arretiermittel 9 zur Fixierung des oberen Lehnenteils 5 in der Normal-Gebrauchsstellung ist ein Hebelsystem vorgesehen, das von zwei (nicht näher bezeichneten) Seitenwänden des insbesondere taschenartig ausgebildeten Halteteils 6b getragen wird und das als eine form- bzw. kraftformschlüssige Sperre wirkt.

Wie dazu Fig. 4 und insbesondere auch Fig. 5 genauer zeigen, besteht das Hebelsystem in den dargestellten Ausführungen aus zwei zusammenwirkenden Hebeln 9a, 9b, die in dem Halteteil 6b schwenkbar gelagert sind. Ein erster, insbesondere einarmig ausgebildeter, Hebel (Klinke 9a) ist seitlich in Lagern 9c des Halteteils 6b gelagert, wobei die Lagerachse Y-Y parallel zur Drehachse X-X des oberen Lehnenteils 5 verläuft, und stützt den durch die Drehfeder 6a vorgespannten schwenkbaren Querholm 5a gegenüber einem feststehenden Gegenlager 4c ab. Das Gegenlager 4c befindet sich dabei am oberen Ende eines anderendig fest mit dem unteren Lehnenteil 4 verbundenen, in das taschenartige Halteteil 6b hineinragenden Tragteiles 4d und ist durch eine Anschlagfläche für eine etwa am freien Hebelende angeordnete Nase 9d der Klinke 9a gebildet. In einer Sperrstellung der Klinke 9a liegt die Nase 9d am Gegenlager 4c an.

Der zweite, insbesondere zweiarmig ausgebildete, Hebel (Arretierhebel 9b) dient zur Arretierung der Klinke 9a in ihrer Sperrstellung. Er ist seitlich in Lagern 9e des Halteteils 6b gelagert, wobei die Lagerachse Z-Z wiederum parallel zur Drehachse X-X des oberen Lehnenteils 5 verläuft, und greift in seiner Sperrstellung mit einer Sperrnase 9f derart formschlüssig in die Klinke 9a ein, daß diese sich nicht aus ihrer Sperrstellung herausbewegen kann. Die Darstellungen in Fig. 4 und 5 zeigen jeweils die Sperrstellungen von Klinke 9a und Arretierhebel 9b.

Bei Eintreten des Bedarfsfalles (Heckaufprall) wird der Arretierhebel 9b um seine Lagerachse Z-Z - gemäß den Darstellungen in Fig. 4 und 5 - im Uhrzeigersinn - verschwenkt, wobei der formschlüssige Eingriff der Sperrnase 9f in die Klinke 9a aufgehoben und die Klinke 9a für eine Schwenkbewegung um ihre Achse Y-Y (gemäß den Darstellungen in Fig. 4 und 5 - ebenfalls im Uhrzeigersinn) freigegeben wird. Das Auslösen des Arretierhebels 9b kann dabei mit nur sehr geringer, an einem Hebelende 9g angreifender Betätigungskraft erfolgen und z.B. mit Vorteil mittels eines (nicht dargestellten) Elektromagneten bewirkt werden, der seinen Schaltimpuls von einem Sensor (als Mittel 7 zur Detektierung des Heckaufpralls) erhält.

Nachdem die Klinke 9a durch den Arretierhebel 9b freigegeben ist, wird sie (entsprechend der gewählten Darstellung - im Uhrzeigersinn) - allein unter der Wirkung der Drehfeder 6a um ihre Lagerachse Y-Y aus ihrer Sperrstellung in ihre Freigabestellung geschwenkt. Dabei wird die Reibung zwischen der feststehenden Anschlagfläche des Gegenlagers 4c und der Abstützfläche an der Nase 9d der Klinke 9a überwunden. Der Querholm 4a schwenkt mit der Kopfstütze 8 in Richtung des Hinterkopfs des Fahrzeuginsassen (Abfangstellung der Kopfstütze 8). Die Positionen, die dabei das obere Lehnenteil 5 und die Kopfstütze 8 einnehmen, sind in Fig. 1 - wie bereits erwähnt - strichpunktiert gezeichnet und in Fig. 5 für die zweite bevorzugte Ausführung der Erfindung durch strichpunktierte Bezugslinien gekennzeichnet.

Die Mittel 7 zur Detektierung des Heckaufpralls könnten - alternativ zur Sensorausbildung - auch durch ein mechanisches Steuersystem gebildet sein, welches mechanische Teile aufweist, die - beschleunigt durch die Wirkung des Heckaufpralls - den Arretierhebel 9b außer Eingriff, d.h. in eine entsperrte Lage bringen. Auch dies entspricht einer unmittelbaren Wirkverbindung U von den Mitteln 7 zur Detektierung des Heckaufpralls auf die Arretiermittel 9.

Als Arretiermittel 10 zur Fixierung des oberen Lehnenteils 5 gegen eine Rückbewegung des oberen Lehnenteils 5 aus der Sicherheitsstellung in die Normal-Gebrauchsstellung bzw. der Kopfstütze 8 aus der Abfangstellung in die Komfortstellung sind gemäß Fig. 3 bis 8 verschiedene Ausführungsformen möglich.

Es wurde dabei schon eingangs erwähnt, daß diese Arretiermittel 10 (Rücklaufsperre) zur Unterbindung eines Feder- bzw. Rückpralleffektes beim Wirksamwerden der Schutzeinrichtung derart ausgeführt sind, daß sie nicht nur in der Normal-Gebrauchsstellung und in der Sicherheitsstellung des oberen Lehnenteils 5, sondern auch in dazwischenliegenden Positionen eine Arretierung ermöglichen. Dies kann - wie anhand der nachstehend beschriebenen verschiedenen Ausführungsformen der Rücklaufsperre deutlich wird - beispielsweise mittels selbsthemmender, form- und/oder kraftschlüssig - vorzugsweise klemmend - wirkender Wälzkörper- oder Keilsperren oder mittels einer Rasteinrichtung realisiert werden. Für die beschriebenen Ausführungsformen der Rücklaufsperre ist es dabei auf dem Wege einer geeigneten Auslegung der Rücklaufsperre (Größe und Anzahl von Wälzkörpem, beim Rückschwenken wirksam werdender Anstieg von Sperrflächen, Anzahl und Größe der Zähne einer Rastverzahnung usw.) vorteilhafterweise möglich, ein Rücklaufspiel des oberen Lehnenteils 5 (Rückbewegung entgegen der Schwenkrichtung S in Richtung der Normal-Gebrauchsstellung des Lehnenteils 5) auf einen maximalen Winkelbetrag von etwa 1° zu begrenzen.

Die Ausführung gemäß Fig. 3 und 4 zeigt eine Ausbildung der Arretiermittel 10 zur Fixierung des oberen Lehnenteils 5, insbesondere des Querholms 5a, als rastender Ratschenmechanismus. Dabei ist ein Trägerelement 10a für mindestens eine, in der dargestellten Ausführung für zwei Rastverzahnungen 10b, 10c, innerhalb des taschenförmigen Halteteils 6b befestigt. Die jeweilige Verzahnung 10b, 10c wirkt mit mindestens einem, in der dargestellten Ausführung mit zwei, als Gegenrastelemente fungierenden Zähnen 4e, 4f am Tragteil 4d zusammen. Durch die beiden Verzahnungen 10b, 10c und die korrespondierenden Gegenzähne 4e, 4f, die jeweils gegeneinander versetzt sind, wird eine höhere Sicherheit der Rastverbindung und eine Verkleinerung (Halbierung) des Rücklaufspiels des oberen Lehnenteils 5 erreicht.

Die Ausführung gemäß Fig. 5 zeigt eine Ausbildung der Arretiermittel 10 zur Fixierung des oberen Lehnenteils 5, insbesondere des Querholms 5a, als Wälzkörper-Sperreinrichtung. Diese Wälzkörper-Sperreinrichtung besteht aus einem konzentrisch um die Schwenkachse X-X des oberen Lehnenteils 5 angeordneten Zahnkranz 10d, der innerhalb eines zylinderförmigen Mantels 10e angeordnet ist, sowie aus zwischen den Zähnen 10f des Zahnkranzes 10d sowie zwischen Zahnkranz 10d und Mantel 10e angeordneten Wälzkörpem 10g. Die Drehfeder 6a ist fest mit dem Zahnkranz 10d verbunden. Die Zahnflanken der Zähne 10f des Zahnkranzes 10d sind derart ausgeführt, daß die Wälzkörper-Sperreinrichtung das Verschwenken (Schwenkrichtung S) in die Sicherheitsstellung des oberen Lehnenteils 5 bzw. in die Abfangstellung der Kopfstütze 8 zuläßt, da die Wälzkörper 10g zwischen Zahnkranz 10d und Mantel 10e frei rollen können, während im Falle einer gegenläufigen Bewegung ein Verklemmen der Wälzkörper 10g zwischen Zahnkranz 10d und Mantel 10e erfolgt, das diese Rückbewegung hemmt.

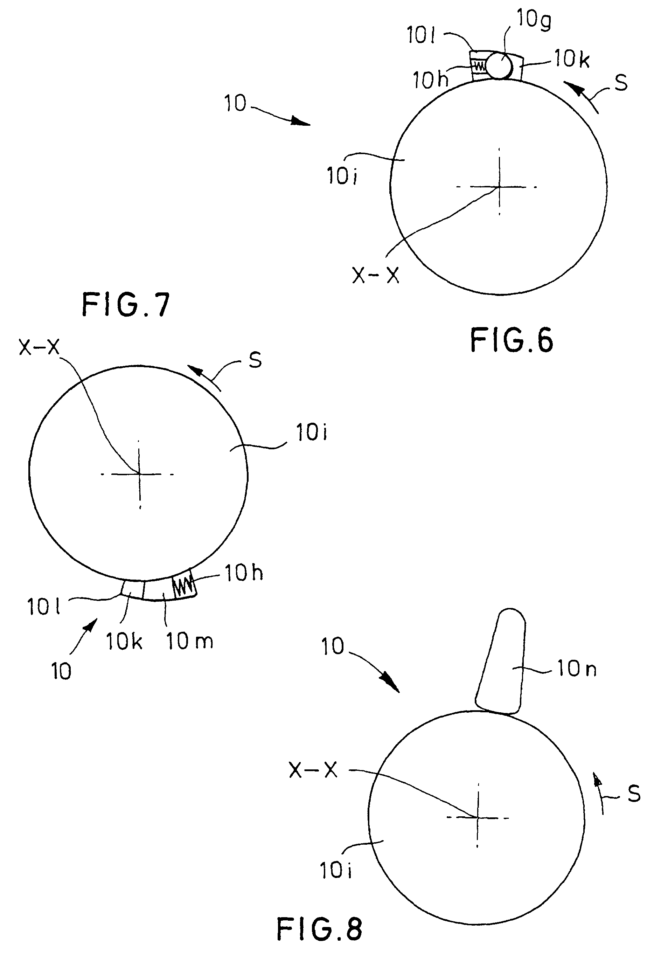

Ein ähnliches Prinzip liegt auch der in Fig. 6 dargestellten Ausführung der Rücklaufsperre zugrunde. Unterschiede zur vorstehend beschriebenen Ausführung bestehen hierbei jedoch darin, daß der bzw. die Wälzkörper 10g jeweils unter der Belastung einer Feder 10h stehen und daß nicht ein dem Zahnkranz 10d entsprechendes, konzentrisch um die Schwenkachse X-X des oberen Lehnenteils 5 angeordnetes Innenteil 10i Aufnahmen 10k für die Wälzkörper 10g aufweist, sondem ein dem zylinderförmigen Mantel 10e entsprechendes Mantelteil 10l. Die Funktionsweise dieser Einrichtung entspricht der vorstehend beschriebenen. Die Wände der Aufnahmen 10k des Mantelteils 101 sind derart ausgeführt, daß die Wälzkörper-Sperreinrichtung das Verschwenken (Schwenkrichtung S) in die Sicherheitsstellung des oberen Lehnenteils 5 bzw. in die Abfangstellung der Kopfstütze 8 zuläßt, da die Wälzkörper 10g zwischen dem Innenteil 10i und dem Mantelteil 10l gege die Wirkung der Feder 10h frei rollen können, während im Falle einer gegenläufigen Bewegung unter der zusätzlich in diese Richtung weisenden Wirkung der Feder 10h ein Verklemmen der Wälzkörper 10g erfolgt, das diese Rückbewegung hemmt.

Die in Fig. 7 dargestellte Ausführung der Rücklaufsperre unterscheidet sich von derjenigen gemäß Fig. 6 dadurch, daß anstelle der Wälzkörper 10g Klemmkeile 10m verwendet werden.

Bei der in Fig. 8 dargestellten Ausführung der Rücklaufsperre ist wie bei den beiden vorhergehenden Ausführungen ein zylinderförmiges Innenteil 10i mit glatter (oder auch zur Reibungserhöhung strukturierter oder mit einem Belag versehener) Mantelfläche vorgesehen, die Verklemmung im Falle der beschriebenen Rückbewegung erfolgt jedoch mittels mindestens eines exzentrisch gelagerten, kraftschlüssig an der Mantelfläche des Innenteils 10i angreifenden Schwenkkörpers 10n.

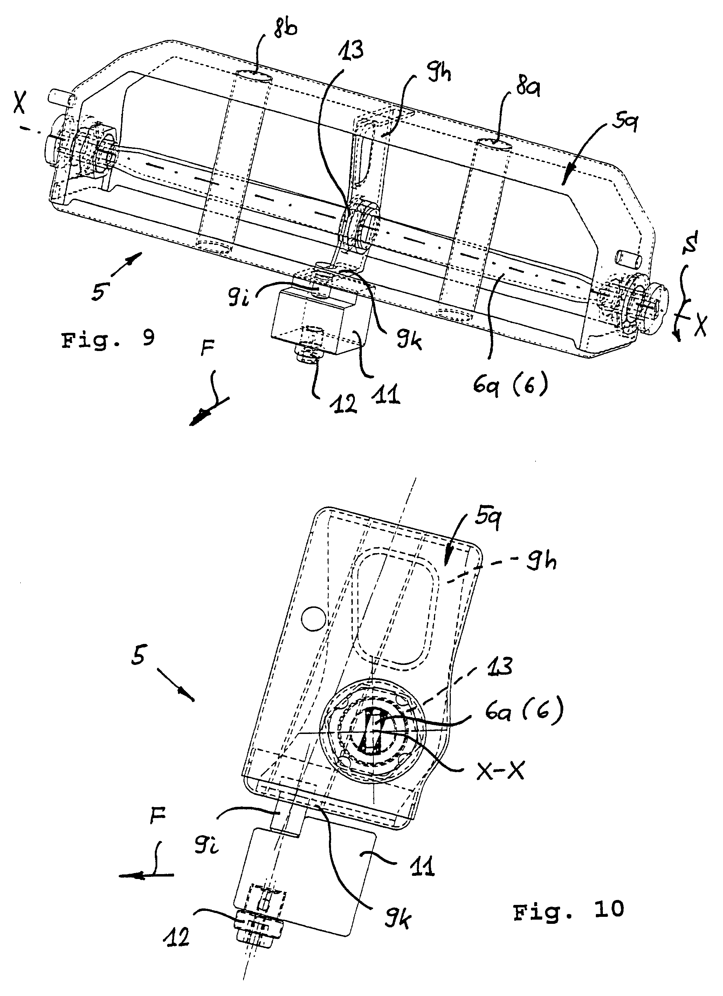

Wie bereits erwähnt, zeigen Fig. 9 und 10 zwei Ansichten eines oberen Teils 5 einer weiteren bevorzugten Ausführungsform einer erfindungsgemäßen Rückenlehne 2. Bei dieser Ausführung umfaßt das Hebelsystem der Arretiermittel 9 zur Fixierung A des oberen Lehnenteils 5 in der Normal-Gebrauchsstellung einen fest mit dem oberen Lehnenteil 5, insbesondere über einen Halter 11 mit dem Querholm 5a des Lehnenteils 5, und mit der drehmomenterzeugenden Einrichtung 6 verbundenen Sicherungshebel 9h. Dieser ist in der gezeigten Ausführung insbesondere als ein um die Schwenkachse X-X des oberen Lehnenteils 5 verschwenkbarer Winkelhebel ausgebildet und ist in einer, in den Fig. 9 und 10 gezeigten Sperrstellung durch einen Sperrbolzen 9i gesichert. Der Sperrbolzen 9i durchgreift dazu in der Sperrstellung eine Öffnung 9k in einem Winkelschenkel des Sicherungshebels 9h, während der andere Winkelschenkel mit der Drehfeder 6a verbunden ist. Aus der Öffnung 9k kann der Sperrbolzen 9i im Crashfall zur Freigabe der drehmomenterzeugenden Einrichtung 6 - konkret der Drehfeder 6a - herausbewegt werden.

Die Mittel 7 zur Detektierung des Heckaufpralls stehen dabei derart in Wirkverbindung U mit den Arretiermitteln 9 zur Fixierung A des oberen Lehnenteils 5 in der Normal-Gebrauchsstellung - im dargestellten Fall mit dem Sperrbolzen 9i -, und die Arretiermittel 9 - konkret der Sperrbolzen 9i und der Sicherungshebel 9h - stehen derart in Wirkverbindung B mit der drehmomenterzeugenden Einrichtung 6 (Drehfeder 6a), daß im Falle des Aufpralls eine Freigabe der drehmomenterzeugenden Einrichtung 6 durch die Arretiermittel 9, pyrotechnisch initiiert wird, d.h. vorzugsweise mittels einer Zündpatrone, erfolgt. Die dazu dienende pyrotechnische Einrichtung 12 kann - wie dargestellt - in dem Halter 11 für den Sperrbolzen 9i angeordnet sein.

Des weiteren ist bei der in Fig. 9 und 10 dargestellten Ausführung im Unterschied zu den vorhergehend dargestellten Ausführungen eine spezielle Rücklaufsperre 13 vorgesehen, über die der Sicherungshebel 9h mit der Drehfeder 6a verbunden ist. Diese Rücklaufsperre 13 dient als Montagehilfe und blockiert eine Verschwenkung des oberen Lehnenteils 5 in Richtung S aus seiner Normal-Gebrauchsstellung in seine Sicherheitsstellung, läßt eine Verschwenkung in entgegengesetzter Richtung jedoch zu. Die Rücklaufsperre 13 kann als eine selbsthemmende, form- und/oder kraftschlüssig - vorzugsweise klemmend - wirkende Wälzkörper- oder Keilsperre oder auch als Rasteinrichtung derart ausgeführt sein, daß sie auch in zwischen der Sicherheitsstellung und der Normal-Gebrauchsstellung des oberen Lehnenteils (5) liegenden Positionen eine Arretierung ermöglicht. Im Detail kann die Rücklaufsperre 13 ebenso ausgeführt sein, wie die vorstehend beschriebenen Arretiermittel 10 zur Fixierung K des oberen Lehnenteils gegen eine Rückbewegung aus der Sicherheitsstellung in die Normal-Gebrauchsstellung, nur das sie in umgekehrter Richtung wirkt. Durch die Rücklaufsperre 13 kann vorteilhafterweise eine Montage-erleichterung erzielt werden, indem zunächst beispielsweise der Sperrbolzen 9i in die Öffnung 9k des Sicherungshebels 9h eingeführt wird, die dazu in bevorzugter Weise als Langloch ausgebildet sein kann, und dann mittels eines Werkzeugs die Drehfeder 6a (entgegen der Richtung S) verspannt wird, wobei die Rücklaufsperre 13 dieses Verspannen zuläßt, jedoch ein ungewolltes Zurückschnellen (Entspannen) der Drehfeder 6a verhindert. Im Crashfall ist ein solches Entspannen der Drehfeder 6a jedoch möglich, da nach Entfernen des Sperrbolzens 9i der über die Rücklaufsperre an der Drehfeder 6a festgehaltene Sicherungshebel 9h mitbewegt werden kann.

Wie bereits aus der vorstehenden Beschreibung hervorgeht, ist die Erfindung nicht auf die dargestellten Ausführungsbeispiele beschränkt. So könnte beispielsweise das Hebelsystem auch anders als dargestellt bzw. als beschrieben ausgeführt und an anderer Stelle angeordnet sein. Was die zeichnerische Darstellung anbelangt, so sind die Fig. 6 bis 8 teilweise schematisiert dargestellt. Im Hinblick auf weitere mögliche Details der erfindungsgemäßen Rückenlehne 2 und ein damit realisierbares Verfahren zur Vorbeugung unfallbedingter Verletzungen eines Sitzbenutzers wird auf die eingangs erwähnte deutsche Patentanmeldung 199 38 904.7 verwiesen.

### Bezugszeichen

- 1: Fahrzeugsitz
- 2: Rückenlehne
- 3: Sitzteil
- 4: unteres Lehnenteil von 2
- 4a: Befestigungsabschnitt von 2 bzw. 4b
- 4b: Seitenholm von 2
- 4c: Gegenlager für 9a an 4d
- 4d: Tragteil an 4
- 4e: erster Zahn an 4d
- 4f: zweiter Zahn an 4d
- 5: oberes Lehnenteil von 2
- 5a: oberer Querholm von 2
- 6: drehmomentenerzeugende Einrichtung
- 6a: Drehfeder
- 6b: Halteteil
- 7: Mittel zur Detektierung eines Heckaufpralls
- 8: Kopfstütze
- 8a, 8b: Haltestangen von 8
- 9: Arretiermittel
- 9a: erster Hebel von 9, Klinke
- 9b: zweiter Hebel von 9, Arretierhebel
- 9c: Lager für 9a in 6b
- 9d: Nase an 9a (zum Anschlag an 4c)
- 9e: Lager für 9b in 6b
- 9f: Sperrnase für 9a an 9b
- 9g: Hebelende (Kraftangriff zur Betätigung)
- 9h: Sicherungshebel
- 9i: Sperrbolzen
- 9k: Öffnung in 9h für 9i
- 10: Arretiermittel
- 10a: Trägerelement für 10b/10c von 10
- 10b: erste Rastverzahnung an 10a
- 10c: zweite Rastverzahnung an 10a
- 10d: Zahnkranz von 10
- 10e: Mantel von 10
- 10f: Zahn von 10d
- 10g: Wälzkörper von 10
- 10h: Feder an 10g/10m
- 10i: Innenteil von 10
- 10k: Aufnahme für 10g/10m in 10d/10l
- 10l: Mantelteil von 10
- 10m: Klemmkeil von 10
- 10n: Schwenkkörper von 10
- 11: Halter für 9i und 12
- 12: pyrotechnische Einrichtung

- A: Wirkverbindung von 9 auf 5
- A1: Abstand zwischen Kopf und 8 (Komfortstellung)
- A2: Abstand zwischen Kopf und 8 (Abfangstellung)
- a: Beschleunigung
- B: Wirkverbindung von 9 auf 6
- F: Fahrtrichtung
- H: Höhe, Abstand zwischen 3 und X-X
- K: Wirkverbindung von 10 auf 5
- M: Drehmoment, Wirkverbindung von 6 auf 5
- S: Schwenkrichtung von 5 bzw. 8
- U: Wirkverbindung von 7 auf 9
- X-X: Lager- und Schwenkachse von 5/6
- Y-Y: Lager- und Schwenkachse von 9a
- Z-Z: Lager- und Schwenkachse von 9b

## Patentansprüche

1. Rückenlehne (2) für einen Fahrzeugsitz (1) mit einer integrierten Schutzeinrichtung (4, 5, 6, 7, 8, 9, 10, 11, 12, 13) gegen unfallbedingte Verletzungen eines Sitzbenutzers im Falle eines Heckaufpralls, insbesondere gegen Halswirbelsyndrom bzw. Schleudertrauma, mit einem unteren, mit einem Sitzteil (3) verbundenen Lehnenteil (4) und mit einem oberen Lehnenteil (5), das um eine in der Rückenlehne (2) quer zur Fahrzeuglängsachse verlaufende Achse (X-X) relativ zum unteren Lehnenteil (4) aus einer Normal-Gebrauchsstellung heraus in einer in Fahrtrichtung (F) weisenden Schwenkrichtung (S) durch ein in Schwenkrichtung wirkendes Drehmoment (M) um einen Winkelbereich in eine Sicherheitsstellung verschwenkbar ist, wobei die Schutzeinrichtung (4, 5, 6, 7, 8, 9, 10, 11, 12, 13) eine Einrichtung (6) zur Erzeugung des Drehmomentes (M), Mittel (7) zur Detektierung eines Heckaufpralls und Arretiermittel (9) zur Fixierung (A) des oberen Lehnenteils (5) in der Normal-Gebrauchsstellung aufweist,
**dadurch gekennzeichnet, daß** die Einrichtung (6) zur Erzeugung des Drehmomentes (M) aus einem unabhängig von einer Belegung des Fahrzeugsitzes (2) wirkenden Kraft- oder Energiespeicher, die Mittel (7) zur Detektierung eines Heckaufpralls durch einen Fahrzeug-Crash-Sensor, wie einen Beschleunigungssensor, und die Arretiermittel (9) aus einem Hebelsystem gebildet sind, wobei der Fahrzeug-Crash-Sensor derart in Wirkverbindung (U, B) mit dem Kraft- oder Energiespeicher und mit dem die Arretiermittel (9) zur Fixierung (A) des oberen Lehnenteils (5) bildenden Hebelsystem steht, daß im Falle des Heckaufpralls die Fixierung (A) des oberen Lehnenteils (5) in der Normal-Gebrauchsstellung aufgehoben, der Kraft- und Energiespeicher aktiviert und dadurch die Schwenkbewegung eingeleitet wird.

2. Rückenlehne nach Anspruch 1,
**dadurch gekennzeichnet**, daßinoderandemoberenLehnenteil (5) eine Kopfstütze (8) befestigt ist, die bei einem Heckaufprall aus einer Komfortstellung, in der ihr Abstand (A1) zum Kopf eines Sitzbenutzers etwa 40 bis 110 mm beträgt, in eine Abfangstellung bewegt wird, in der ihr Abstand (A2) zum Kopf eines Sitzbenutzers Null oder nahezu Null ist.

3. Rückenlehne nach Anspruch 1 oder 2,
**dadurch gekennzeichnet, daß** die drehmomenterzeugende Einrichtung (6) durch ein vorgespanntes Federelement oder mehrere vorgespannte Federelemente gebildet ist.

4. Rückenlehne nach Anspruch 3,
**dadurch gekennzeichnet, daß** das Federelement durch eine vorzugsweise in der Schwenkachse (X-X) angeordnete Drehfeder (6a) gebildet ist.

5. Rückenlehne nach Anspruch 3 oder 4,
**dadurch gekennzeichnet, daß** die Mittel (7) zur Detektierung eines Heckaufpralls derart in Wirkverbindung (U) mit den Arretiermitteln (9) zur Fixierung (A) des oberen Lehnenteils (5) in der Normal-Gebrauchsstellung stehen, und die Arretiermittel (9) derart in Wirkverbindung (B) mit der drehmomenterzeugenden Einrichtung (6) stehen, daß im Falle des Aufpralls das vorgespannte Federelement, insbesondere die Drehfeder (6a), durch die Arretiermittel (9) freigegeben wird.

6. Rückenlehne nach einem der Ansprüche 1 bis 5,
**gekennzeichnet durch** Arretiermittel (10) zur Fixierung (K) des oberen Lehnenteils (5) gegen eine Rückbewegung aus der Sicherheitsstellung in die Normal-Gebrauchsstellung.

7. Rückenlehne nach einem der Ansprüche 1 bis 6,
**dadurch gekennzeichnet, daß** das Hebelsystem der Arretiermittel (9) zur Fixierung (B) des oberen Lehnenteils (5) in der Normal-Gebrauchsstellung aus mindestens zwei zusammenwirkenden Hebeln (9a, 9b) gebildet ist.

8. Rückenlehne nach einem der Ansprüche 1 bis 7,
**dadurch gekennzeichnet, daß** das Hebelsystem der Arretiermittel (9) zur Fixierung (A) des oberen Lehnenteils (5) in der Normal-Gebrauchsstellung einen fest mit dem oberen Lehnenteil (5), insbesondere über einen Halter (11) mit einem Querholm (5a) des Lehnenteils (5), und mit der drehmomenterzeugenden Einrichtung (6) verbundenen Sicherungshebel (9h), insbesondere einen um die Schwenkachse (X-X) des oberen Lehnenteils (5) verschwenkbaren Winkelhebel, umfaßt, der in einer Sperrstellung durch einen Sperrbolzen (9i) gesichert ist.

9. Rückenlehne nach Anspruch 8,
**dadurch gekennzeichnet, daß** der Sperrbolzen (9i) in der Sperrstellung eine insbesondere langlochartige Öffnung (9k) des Sicherungshebels (9h) durchgreift, aus der er zur Freigabe der drehmomenterzeugenden Einrichtung (6) herausbewegt wird.

10. Rückenlehne nach Anspruch 8 oder 9,
**dadurch gekennzeichnet, daß** der Sicherungshebel (9h) mit der Drehfeder (6a) über eine Rücklaufsperre (13) verbunden ist, die eine Verschwenkung des oberen Lehnenteils (5) in Richtung (S) aus seiner Normal-Gebrauchsstellung in seine Sicherheitsstellung blockiert, in entgegengesetzter Richtung jedoch zuläßt.

11. Rückenlehne nach Anspruch 10,
**dadurch gekennzeichnet, daß** die Rücklaufsperre (13) als eine selbsthemmende, form- und/oder kraftschlüssig - vorzugsweise klemmend - wirkende Wälzkörper- oder Keilsperre oder als Rasteinrichtung derart ausgeführt ist, daß sie auch in zwischen der Sicherheitsstellung und der Normal-Gebrauchsstellung des oberen Lehnenteils (5) liegenden Positionen eine Arretierung ermöglicht.

12. Rückenlehne nach einem der Ansprüche 1 bis 7,
**dadurch gekennzeichnet, daß** das Hebelsystem aus einer schwenkbar in dem oberen Lehnenteil (5), insbesondere in einem Querholm (5a) des Lehnenteils (5), gelagerten Klinke (9a), die sich in einer Sperrstellung an einem relativ zu dem oberen Lehnenteil (5) feststehenden Gegenlager (4c) abstützt und aus einem schwenkbar gelagerten Arretierhebel (9b), gebildet ist, der in einer Sperrstellung in die Klinke (9a) eingreift und in einer Freigabestellung die Klinke (9a) freigibt.

13. Rückenlehne nach einem der Ansprüche 1 bis 12,
**dadurch gekennzeichnet, daß** das Hebelsystem in Seitenwänden eines im oberen Lehnenteil (5) angeordneten, taschenartigen Halteteils (6b) gelagert ist.

14. Rückenlehne nach Anspruch 12 oder 13,
**dadurch gekennzeichnet**, daßdasGegenlager(4c)aneinem oberen Ende eines anderendig fest mit dem unteren Lehnenteil (4) verbundenen, vorzugsweise in das taschenartige Halteteil (6b) hineinragenden Tragteiles (4d) angeordnet und durch eine Anschlagfläche für eine etwa an einem freien Hebelende angeordnete Nase (9d) der Klinke (9a) gebildet ist.

15. Rückenlehne nach einem der Ansprüche 12 bis 14,
**dadurch gekennzeichnet, daß** eine Bewegung des Arretierhebels (9b) aus seiner Sperrstellung in seine Freigabestellung mittels eines Elektromagneten bewirkt wird, der seinen Schaltimpuls von einem Sensor als Mittel (7) zur Detektierung des Heckaufpralls erhält.

16. Rückenlehne nach einem der Ansprüche 6 bis 15,
**dadurch gekennzeichnet, daß** die Arretiermittel (10) zur Fixierung (K) des oberen Lehnenteils (5) gegen eine Rückbewegung aus der Sicherheitsstellung in die Normal-Gebrauchsstellung jeweils als eine selbsthemmende, form- und/oder kraftschlüssig - vorzugsweise klemmend - wirkende Wälzkörperoder Keilsperre oder als Rasteinrichtung ausgeführt sind, wobei die Arretiermittel (10) vorzugsweise auch in zwischen der Sicherheitsstellung und der Normal-Gebrauchsstellung des oberen Lehnenteils (5) liegenden Positionen eine Arretierung gegen eine Rückbewegung ermöglichen.

17. Rückenlehne nach einem der Ansprüche 6 bis 16,
**dadurch gekennzeichnet, daß** die Arretiermittel (10) zur Fixierung (K) des oberen Lehnenteils (5) gegen eine Rückbewegung aus der Sicherheitsstellung in die Normal-Gebrauchsstellung als rastender Ratschenmechanismus mit mindestens einer, vorzugsweise zwei, insbesondere innerhalb des taschenförmigen Halteteils (6b) befestigten Rastverzahnungen (10b, 10c) und mit mindestens einem, vorzugsweise zwei, als Gegenrastelemente fungierenden, insbesondere am Tragteil (4d) angeordneten Zähnen (4e, 4f) ausgebildet ist.

18. Rückenlehne nach einem der Ansprüche 6 bis 16,
**dadurch gekennzeichnet, daß** die Arretiermittel (10) zur Fixierung (K) des oberen Lehnenteils (5) gegen eine Rückbewegung aus der Sicherheitsstellung in die Normal-Gebrauchsstellung als Wälzkörper-Sperreinrichtung ausgebildet sind, die einen konzentrisch um die Schwenkachse (X-X) des oberen Lehnenteils (5) angeordneten Zahnkranz (10d), der innerhalb eines zylinderförmigen Mantels (10e) angeordnet ist, sowie zwischen den Zähnen (10f) des Zahnkranzes (10d) und zwischen Zahnkranz (10d) und Mantel (10e) angeordnete Wälzkörper (10g) umfaßt.

19. Rückenlehne nach einem der Ansprüche 6 bis 16,
**dadurch gekennzeichnet, daß** die Arretiermittel (10) zur Fixierung (K) des oberen Lehnenteils (5) gegen eine Rückbewegung aus der Sicherheitsstellung in die Normal-Gebrauchsstellung als Rücklaufsperre ausgebildet sind, die einen konzentrisch um die Schwenkachse (X-X) des oberen Lehnenteils (5) angeordnetes zylindrisches Innenteil (10i), das innerhalb eines Mantelteils (10l) angeordnet ist, sowie in Aufnahmen (10k) des Mantelteils (10l) angeordnete Wälzkörper (10g) oder Klemmkeile (10m) umfaßt.

20. Rückenlehne nach einem der Ansprüche 6 bis 16,
**dadurch gekennzeichnet, daß** die Arretiermittel (10) zur Fixierung (K) des oberen Lehnenteils (5) gegen eine Rückbewegung aus der Sicherheitsstellung in die Normal-Gebrauchsstellung als Rücklaufsperre ausgebildet sind, die ein zylindrisches Innenteil (10i) mit glatter oder zur Reibungserhöhung strukturierter oder mit einem Belag versehener Mantelfläche und einen exzentrisch gelagerten, kraftschlüssig an der Mantelfläche des Innenteils (10i) angreifenden Schwenkkörper (10n) umfaßt.

21. Rückenlehne nach einem der Ansprüche 6 bis 16,
**dadurch gekennzeichnet, daß** die Arretiermittel (10) zur Fixierung (K) des oberen Lehnenteils (5) gegen eine Rückbewegung aus der Sicherheitsstellung in die Normal-Gebrauchsstellung derart ausgebildet sind, daß die Arretiermittel (10) ein Rücklaufspiel, d.h. eine Rückbewegung entgegen der Schwenkrichtung (S) in Richtung der Normal-Gebrauchsstellung des oberen Lehnenteils (5), auf einen maximalen Winkelbetrag von etwa 1° begrenzen.

22. Rückenlehne nach einem der Ansprüche 1 bis 21,
**dadurch gekennzeichnet, daß** die Mittel (7) zur Detektierung eines Heckaufpralls derart in Wirkverbindung (U) mit den Arretiermitteln (9) zur Fixierung (A) des oberen Lehnenteils (5) in der Normal-Gebrauchsstellung stehen und die Arretiermittel (9) derart in Wirkverbindung (B) mit der drehmomenterzeugenden Einrichtung (6) stehen, daß im Falle des Aufpralls eine Freigabe der drehmomenterzeugenden Einrichtung (6) durch die Arretiermittel (9), insbesondere durch den/einen Sicherungshebel (9h), mittels einer pyrotechnischen Einrichtung (12), vorzugsweise mittels einer Zündpatrone, erfolgt.

## Claims

1. Backrest (2) for a vehicle seat (1) having an integrated protection device (4, 5, 6, 7, 8, 9, 10, 11, 12, 13) against accident-induced injuries to a seat user in the event of a rear impact, in particular against cervical vertebrae syndrome or whiplash, having a lower backrest part (4) which is connected to a seat part (3) and having an upper backrest part (5) which can be caused by a torque (M) acting in the pivoting direction to pivot by an angular range about an axis (X-X), which runs in the backrest (2) transversely with respect to the longitudinal axis of the vehicle, relative to the lower backrest part (4) from a normal use position in a pivoting direction (S) pointing in the direction of travel (F) into a safety position, the protection device (4, 5, 6, 7, 8, 9, 10, 11, 12, 13) having a device (6) for producing the torque (M), means (7) for detecting a rear impact and arresting means (9) for fixing (A) the upper backrest part (5) in the normal use position, **characterized in that** the device (6) for producing the torque (M) is formed from a force or energy store which operates irrespective of whether the vehicle seat (2) is occupied, the means (7) for detecting a rear impact are formed by a vehicle crash sensor, such as an acceleration sensor, and the arresting means (9) are formed from a lever system, the vehicle crash sensor being operatively connected (U, B) to the force or energy store and to the lever system forming the arresting means (9) for fixing (A) the upper backrest part (5) in such a manner that, in the event of the rear impact, the fixing (A) of the upper backrest part (5) in the normal use position is cancelled, the force and energy store is activated and the pivoting movement is thereby initiated.

2. Backrest according to Claim 1, **characterized in that** a head restraint (8) is fastened in or to the upper backrest part (5) and, during a rear impact, is moved from a comfort position, in which its distance (A1) from the head of a seat user is approximately 40 to 110 mm, into an intercepting position, in which its distance (A2) from the head of a seat user is zero or virtually zero.

3. Backrest according to Claim 1 or 2, **characterized in that** the torque-generating device (6) is formed by a prestressed spring element or by a plurality of prestressed spring elements.

4. Backrest according to Claim 3, **characterized in that** the spring element is formed by a torsion spring (6a) which is preferably arranged in the pivoting axis (X-X).

5. Backrest according to Claim 3 or 4, **characterized in that** the means (7) for detecting a rear impact are operatively connected (U) to the arresting means (9) for fixing (A) the upper backrest part (5) in the normal use position in such a manner, and the arresting means (9) are operatively connected (B) to the torque-generating device (6) in such a manner, that, in the event of the impact, the prestressed spring element, in particular the torsion spring (6a), is released by the arresting means (9).

6. Backrest according to one of Claims 1 to 5, **characterized by** arresting means (10) for fixing (K) the upper backrest part (5) against a movement back out of the safety position into the normal use position.

7. Backrest according to one of Claims 1 to 6, **characterized in that** the lever system of the arresting means (9) for fixing (B) the upper backrest part (5) in the normal use position is formed from at least two interacting levers (9a, 9b).

8. Backrest according to one of Claims 1 to 7, **characterized in that** the lever system of the arresting means (9) for fixing (A) the upper backrest part (5) in the normal use position comprises a securing lever (9h) which is connected fixedly to the upper backrest part (5), in particular to a transverse strut (5a) of the backrest part (5) via a holder (11), and to the torque-generating device (6), in particular an angle lever which can be pivoted about the pivoting axis (X-X) of the upper backrest part (5) and is secured in a locking position by a locking pin (9i).

9. Backrest according to Claim 8, **characterized in that** in the locking position, the locking pin (9i) reaches through an, in particular, slot-like opening (9k) of the securing lever (9h), out of which it is moved in order to release the torque-generating device (6).

10. Backrest according to Claim 8 or 9, **characterized in that** the securing lever (9h) is connected to the torsion spring (6a) via a return lock (13) which blocks a pivoting of the upper backrest part (5) in the direction (S) from its normal use position into its safety position, but permits it in the opposite direction.

11. Backrest according to Claim 10, **characterized in that** the return lock (13) is designed as a self-locking rolling-element lock or wedge-type lock which operates in a form-fitting and/or frictional manner - preferably in a clamping manner - or as a latching device, in such a manner that it also makes arresting possible in positions lying between the safety position and the normal use position of the upper backrest part (5).

12. Backrest according to one of Claims 1 to 7, **characterized in that** the lever system is formed from a catch (9a) which is mounted pivotably in the upper backrest part (5), in particular in a transverse strut (5a) of the backrest part (5), and, in a locking position, is supported on a counterbearing (4c) fixed relative to the upper backrest part (5), and from a pivotably mounted arresting lever (9b) which, in a locking position, engages in the catch (9a) and, in a release position, releases the catch (9a).

13. Backrest according to one of Claims 1 to 12, **characterized in that** the lever system is mounted in side walls of a pocket-like retaining part (6b) arranged in the upper backrest part (5).

14. Backrest according to Claim 12 or 13, **characterized in that** the counterbearing (4c) is arranged at an upper end of a supporting part (4d), which is connected at the other end fixedly to the lower backrest part (4) and preferably protrudes into the pocket-like retaining part (6b), and is formed by a stop surface for a lug (9d) of the catch (9a), which lug is arranged, for example, at a free end of the lever.

15. Backrest according to one of Claims 12 to 14, **characterized in that** a movement of the arresting lever (9b) from its locking position into its release position is brought about by means of an electromagnet which obtains its switching pulse from a sensor in the form of means (7) for detecting the rear impact.

16. Backrest according to one of Claims 6 to 15, **characterized in that** the arresting means (10) for fixing (K) the upper backrest part (5) against a movement back out of the safety position into the normal use position are designed in each case as a self-locking rolling-element lock or wedge-type lock which operates in a form-fitting and/or frictional manner - preferably in a clamping manner - or as a latching device, the arresting means (10) preferably also making arresting possible against a movement back in positions lying between the safety position and the normal use position of the upper backrest part (5).

17. Backrest according to one of Claims 6 to 16, **characterized in that** the arresting means (10) for fixing (K) the upper backrest part (5) against a movement back out of the safety position into the normal use position is designed as a latching ratchet mechanism having at least one, preferably two, latching toothings (10b, 10c), which are fastened, in particular, within the pocket-shaped retaining part (6b), and having at least one, preferably two, teeth (4e, 4f) which act as mating latching elements and are arranged, in particular, on the supporting part (4d).

18. Backrest according to one of Claims 6 to 16, **characterized in that** the arresting means (10) for fixing (K) the upper backrest part (5) against a movement back out of the safety position into the normal use position are designed as a rolling-element locking device which comprises a toothed ring (10d) which is arranged concentrically about the pivoting axis (X-X) of the upper backrest part (5) and is arranged within a cylindrical casing (10e), and rolling elements (10g) arranged between the teeth (10f) of the toothed ring (10d) and between the toothed ring (10d) and casing (10e).

19. Backrest according to one of Claims 6 to 16, **characterized in that** the arresting means (10) for fixing (K) the upper backrest part (5) against a movement back out of the safety position into the normal use position are designed as a return lock which comprises a cylindrical inner part (10i) which is arranged concentrically about the pivoting axis (X-X) of the upper backrest part (5) and is arranged within a casing part (101), and rolling elements (10g) or clamping wedges (10m) arranged in receptacles (10k) on the casing part (101).

20. Backrest according to one of Claims 6 to 16, **characterized in that** the arresting means (10) for fixing (K) the upper backrest part (5) against a movement back out of the safety position into the normal use position are designed as a return lock, which comprises a cylindrical inner part (10i) with a casing surface which is smoothed or textured in order to increase the friction or is provided with a covering, and an eccentrically mounted pivoting body (10n) which acts frictionally on the casing surface of the inner part (10i).

21. Backrest according to one of Claims 6 to 16, **characterized in that** the arresting means (10) for fixing (K) the upper backrest part (5) against a movement back out of the safety position into the normal use position are designed in such a manner that the arresting means (10) limit a return play, i.e. a movement back counter to the pivoting direction (S) in the direction of the normal use position of the upper backrest part (5), to a maximum angular amount of approximately 1°.

22. Backrest according to one of Claims 1 to 21, **characterized in that** the means (7) for detecting a rear impact are operatively connected (U) to the arresting means (9) for fixing (A) the upper backrest part (5) in the normal use position in such a manner, and the arresting means (9) are operatively connected (B) to the torque-generating device (6) in such a manner, that, in the event of the impact, a release of the torque-generating device (6) by the arresting means (9), in particular by the/a securing lever (9h), takes place by means of a pyrotechnic device (12), preferably by means of an ignition cartridge.

## Revendications

1. Dossier (2) pour un siège de véhicule (1) comprenant un dispositif de protection intégré (4, 5, 6, 7, 8, 9, 10, 11, 12, 13) contre des blessures d'un utilisateur du siège provoquées lors d'un accident dans le cas d'un choc par l'arrière, en particulier contre le syndrome des vertèbres cervicales ou d'un syndrome de whiplash, avec une partie de dossier inférieure (4) connectée à une partie de siège (3) et avec une partie de dossier supérieure (5) qui peut pivoter autour d'un axe (X-X) s'étendant dans le dossier (2) transversalement à l'axe longitudinal du véhicule par rapport à la partie de dossier inférieure (4) depuis une position d'utilisation normale dans une direction de pivotement (S) tournée dans la direction de conduite (F) par un couple (M) agissant dans la direction de pivotement autour d'une région coudée dans une position de sécurité, le dispositif de protection (4, 5, 6, 7, 8, 9, 10, 11, 12, 13) présentant un dispositif (6) pour produire le couple (M), des moyens (7) pour détecter un choc par l'arrière et des moyens de blocage (9) pour fixer (A) la partie de dossier supérieure (5) dans la position d'utilisation normale,
**caractérisé en ce que** le dispositif (6) pour produire le couple (M) est formé par un accumulateur de force ou d'énergie agissant indépendamment d'une occupation du siège (2) du véhicule, les moyens (7) pour la détection d'un choc par l'arrière sont formés par un capteur de collision du véhicule, comme un capteur d'accélération, et les moyens de blocage (9) sont formés par un système de levier, le capteur de collision de véhicule étant en liaison coopérante (U, B) avec l'accumulateur de force ou d'énergie et avec le système de levier formant les moyens de blocage (9) pour la fixation () de la partie de dossier supérieure (5) de telle sorte que dans le cas d'un choc par l'arrière, la fixation (A) de la partie de dossier supérieure (5) soit soulevée dans la position d'utilisation normale, que l'accumulateur de force et d'énergie soit activé et que de ce fait le mouvement de pivotement soit amorcé.

2. Dossier selon la revendication 1,
**caractérisé en ce que** dans ou sur la partie de dossier supérieur (5) est fixé un appuie-tête (8), qui dans le cas d'un choc par l'arrière se déplace depuis une position de confort, dans laquelle sa distance (A1) à la tête d'un utilisateur du siège mesure environ 40 à 110 mm, dans une position de soutien dans laquelle sa distance (A2) à la tête d'un utilisateur du siège est nulle ou pratiquement nulle.

3. Dossier selon la revendication 1 ou 2,
**caractérisé en ce que** le dispositif (6) produisant un couple est formé par un élément à ressort précontraint ou par plusieurs éléments à ressort précontraints.

4. Dossier selon la revendication 3,
**caractérisé en ce que** l'élément à ressort est formé par un ressort de torsion (6a) disposé de préférence dans l'axe de pivotement (X-X).

5. Dossier selon la revendication 3 ou 4,
**caractérisé en ce que** les moyens (7) pour détecter un choc par l'arrière sont en liaison coopérante (U) de telle sorte avec les moyens de blocage (9) pour la fixation (A) de la partie de dossier supérieure (5) dans la position d'utilisation normale, et les moyens de blocage (9) sont en liaison coopérante (B) de telle sorte avec le dispositif (6) produisant un couple, que dans le cas de la collision, l'élément à ressort précontraint, en particulier le ressort de torsion (6a) soit libéré par les moyens de blocage (9).

6. Dossier selon l'une quelconque des revendications 1 à 5,
**caractérisé par** des moyens de blocage (10) pour la fixation (K) de la partie de dossier supérieure (5) contre un mouvement de recul depuis la position de sécurité dans la position d'utilisation normale.

7. Dossier selon l'une quelconque des revendications 1 à 6,
**caractérisé en ce que** le système de levier des moyens de blocage (9) pour la fixation (B) de la partie de dossier supérieure (5) dans la position d'utilisation normale est formé par au moins deux leviers coopérants (9a, 9b).

8. Dossier selon l'une quelconque des revendications 1 à 7,
**caractérisé en ce que** le système de levier des moyens de blocage (9) pour la fixation (A) de la partie de dossier supérieure (5) dans la position d'utilisation normale comprend un levier de fixation (9h) connecté fixement à la partie de dossier supérieure (5), en particulier par le biais d'une fixation (11) à un longeron transversal (5a) de la partie de dossier (5), et au dispositif (6) produisant le couple, en particulier un levier coudé pouvant pivoter autour de l'axe de pivotement (X-X) de la partie de dossier supérieure (5), qui est fixé dans une position de blocage par un boulon de blocage (9i).

9. Dossier selon la revendication 8,
**caractérisé en ce que** le boulon de blocage (9i) dans la position de blocage vient en prise à travers une ouverture (9k) notamment de type trou oblong du levier de fixation (9h), depuis laquelle il est ressorti pour libérer le dispositif (6) produisant le couple.

10. Dossier selon la revendication 8 ou 9,
**caractérisé en ce que** le levier de fixation (9h) est connecté au ressort de torsion (6a) par le biais d'une butée de retour (13) qui bloque un pivotement de la partie de dossier supérieure (5) dans la direction (S) depuis sa position d'utilisation normale dans sa position de sécurité, mais l'autorise toutefois dans la direction opposée.

11. Dossier selon la revendication 10,
**caractérisé en ce que** la butée de retour (13) est réalisée en tant que butée à éléments roulants ou butée à coin ou en tant que dispositif d'encliquetage agissant de manière autobloquante, par engagement positif et/ou par force, de préférence par serrage, de telle sorte qu'elle permette également un blocage dans des positions se trouvant entre la position de sécurité et la position d'utilisation normale de la partie de dossier supérieure (5).

12. Dossier selon l'une quelconque des revendications 1 à 7,
**caractérisé en ce que** le système de levier est formé à partir d'un cliquet (9a) monté pivotant dans la partie de dossier supérieure (5), en particulier dans un longeron transversal (5a) de la partie de dossier (5), qui s'appuie dans une position de blocage contre un palier conjugué (4c) fixé par rapport à la partie de dossier supérieure (5) et à partir d'un levier de blocage (9b) monté pivotant, qui vient en prise dans une position de blocage dans le cliquet (9a), et qui libère le cliquet (9a) dans une position de libération.

13. Dossier selon l'une quelconque des revendications 1 à 12,
**caractérisé en ce que** le système de levier est monté dans les parois latérales d'une partie de fixation (6b) de type poche disposée dans la partie de dossier supérieure (5).

14. Dossier selon la revendication 12 ou 13,
**caractérisé en ce que** le palier conjugué (4c) est disposé sur une extrémité supérieure d'une partie de support (4d) connectée fixement à l'autre extrémité à la partie de dossier inférieure (4), saillant de préférence dans la partie de fixation (6b) de type poche, et est formé par une surface de butée pour un nez (9d) du cliquet (9a) disposé approximativement à une extrémité libre de levier.

15. Dossier selon l'une quelconque des revendications 12 à 14,
**caractérisé en ce qu'**un mouvement du levier de blocage (9b) de sa position de blocage dans sa position de libération est effectué au moyen d'un électroaimant qui obtient son impulsion de commutation d'un capteur servant de moyen (7) pour détecter le choc par l'arrière.

16. Dossier selon l'une quelconque des revendications 6 à 15,
**caractérisé en ce que** les moyens de blocage (10) pour la fixation (K) de la partie de dossier supérieure (5) contre un mouvement de recul hors de la position de sécurité dans la position d'utilisation normale sont réalisés à chaque fois sous la forme d'une butée à éléments roulants ou butée à coin ou en tant que dispositif d'encliquetage agissant de manière autobloquante, par engagement positif et/ou par force, de préférence par serrage, les moyens de blocage (10) permettant de préférence également dans des positions se trouvant entre la position de sécurité et la position d'utilisation normale de la partie de dossier supérieure (5) un blocage contre un mouvement de recul.

17. Dossier selon l'une quelconque des revendications 6 à 16,
**caractérisé en ce que** les moyens de blocage (10) pour la fixation (K) de la partie de dossier supérieure (5) contre un mouvement de recul hors de la position de sécurité dans la position d'utilisation normale sont réalisés à chaque fois sous la forme d'un mécanisme à cliquet encliquetable avec au moins une, de préférence deux, dentures d'encliquetage (10b, 10c) fixées en particulier à l'intérieur de la partie de fixation (6b) en forme de poche et avec au moins une, de préférence deux, dents (4e, 4f) servant d'éléments d'encliquetage conjugués, disposées en particulier sur la partie de support (4d).

18. Dossier selon l'une quelconque des revendications 6 à 16,
**caractérisé en ce que** les moyens de blocage (10) pour la fixation (K) de la partie de dossier supérieure (5) contre un mouvement de recul hors de la position de sécurité dans la position d'utilisation normale sont réalisés sous la forme de dispositif de butée à éléments roulants qui comprend une couronne dentée (10d) disposée conceritriquement autour de l'axe de pivotement (X-X) de la partie de dossier supérieur (5), qui est disposée à l'intérieur d'une enveloppe cylindrique (10e), ainsi qu'un élément roulant (10g) disposé entre les dents (10f) de la couronne dentée (10d) et entre la couronne dentée (10d) et l'enveloppe (10e).

19. Dossier selon l'une quelconque des revendications 6 à 16,
**caractérisé en ce que** les moyens de blocage (10) pour la fixation (K) de la partie de dossier supérieure (5) contre un mouvement de recul hors de la position de sécurité dans la position d'utilisation normale sont réalisés sous la forme de butée de retour, qui comprend une partie interne (10i) cylindrique disposée concentriquement autour de l'axe de pivotement (X-X) de la partie de dossier supérieure (5), qui est disposée à l'intérieur d'une partie d'enveloppe (10l) ainsi que des éléments roulants (10g) ou des coins de serrage (10m) disposés dans des logements (10k) de la partie d'enveloppe (10l).

20. Dossier selon l'une quelconque des revendications 6 à 16,
**caractérisé en ce que** les moyens de blocage (10) pour la fixation (K) de la partie de dossier supérieure (5) contre un mouvement de recul hors de la position de sécurité dans la position d'utilisation normale sont réalisés sous la forme de butée de retour, qui comprend une partie interne (10i) cylindrique avec une surface d'enveloppe lisse ou structurée pour augmenter les frottements ou pourvue d'un revêtement, et d'un corps pivotant (10n) monté de manière excentrique et venant en prise par engagement par force contre la surface d'enveloppe de la partie interne (10i).

21. Dossier selon l'une quelconque des revendications 6 à 16,
**caractérisé en ce que** les moyens de blocage (10) pour la fixation (K) de la partie de dossier supérieure (5) contre un mouvement de recul hors de la position de sécurité dans la position d'utilisation normale sont réalisés de telle sorte que les moyens de blocage (10) limitent un jeu de rappel, c'est-à-dire un mouvement de recul à l'encontre de la direction de pivotement (S) dans la direction de la position d'utilisation normale de la partie de dossier supérieure (5), à une valeur angulaire maximale d'environ 1°.

22. Dossier selon l'une quelconque des revendications 1 à 21,
**caractérisé en ce que** les moyens (7) pour détecter un choc par l'arrière sont en liaison coopérante (U) de telle sorte avec les moyens de blocage (9) pour la fixation (A) de la partie de dossier supérieure (5) dans la position d'utilisation normale et les moyens de blocage (9) sont en liaison coopérante (B) de telle sorte avec le dispositif (6) produisant le couple, que dans le cas de la collision, une libération du dispositif (6) produisant le couple s'effectue au moyen des moyens de blocage (9), en particulier par le/un levier de fixation (9h), au moyen d'un dispositif pyrotechnique (12), de préférence au moyen d'une cartouche d'allumage.
